# EUROPEAN PATENT APPLICATION

(11) **EP 2 860 952 A1**
(43) Date of publication of application: **15.04.2015**
(21) Application number: 14188175.5
(22) Date of filing: 08.10.2014
(51) Int. Cl.: H04M 1/725, G06F 3/14

(54) **Display device communicating with an electronic device having a content reproduction function**

(30) Priority: 10.10.2013 JP 2013213018
(71) Applicant: Funai Electric Co., Ltd., Daito-shi, Osaka 574-0013 (JP)
(72) Inventor: FUJITA, Hiroyuki, Daito-shi, Osaka 574-0013 (JP)
(74) Representative: Global IP Europe Patentanwaltskanzlei

(57) **Abstract**

A display device includes a communication component configured to communicate with an electronic device with an electronic device-side display screen, the electronic device having a content reproduction function, a display component configured to display an electronic device-side display image that is displayed on the electronic device-side display screen of the electronic device, and a controller configured to acquire the electronic device-side display image via the communication component. The controller is further configured to acquire first information related to a change in at least one of position and orientation of the electronic device, and further configured to perform control to display the electronic device-side display image on the display component based on the first information.

## Description

### CROSS-REFERENCE TO RELATED APPLICATIONS

This application claims priority to Japanese Patent Application No. 2013-213018 filed on October 10, 2013. The entire disclosure of Japanese Patent Application No. 2013-213018 is hereby incorporated herein by reference.

### BACKGROUND

### Field of the Invention

The present invention generally relates to a display device. More specifically, the present invention relates to a display device configured to communicate with an electronic device having a content reproduction function.

### Background Information

Display devices capable of communicating with an electronic device having a content reproduction function are known in the art (see International Publication No. WO 2007/032407 (Patent Literature 1), for example).

The above-mentioned Patent Literature 1 discloses a portable terminal having a portable terminal-side display component that displays application video (content) and an external output component capable of the external output of application data, as well as an external display device that is connected to this portable terminal via an output cable. This external display device is configured such that the application video of the portable terminal that has been acquired via the output cable can be outputted to an external display device-side display component.

### SUMMARY

However, with the external display device discussed in the above-mentioned Patent Literature 1, when the application video of the portable terminal is outputted to the external display device-side display component, it may be necessary, for example, to display the application video of the portable terminal on the external display device-side display component by performing an operation to reproduce the application on the portable terminal side after selecting video (input source selection) with a remote control of the external display device, or performing another such operation. Accordingly, a problem is that the display operation performed by the user becomes complicated when the user wants to display the application video of the portable terminal on the external display device.

One aspect is to provide a display device with which user convenience can be improved by preventing the operation for displaying the content of an electronic device on a display device from becoming complicated.

In view of the state of the known technology, a display device includes a communication component configured to communicate with an electronic device with an electronic device-side display screen, the electronic device having a content reproduction function, a display component configured to display an electronic device-side display image that is displayed on the electronic device-side display screen of the electronic device, and a controller configured to acquire the electronic device-side display image via the communication component. The controller is further configured to acquire first information related to a change in at least one of position and orientation of the electronic device, and further configured to perform control to display the electronic device-side display image on the display component based on the first information.

Also other objects, features, aspects and advantages of the present disclosure will become apparent to those skilled in the art from the following detailed description, which, taken in conjunction with the annexed drawings, discloses one embodiment of the display device.

### BRIEF DESCRIPTION OF THE DRAWINGS

Referring now to the attached drawings which form a part of this original disclosure:
FIG. 1 is a diagram of a connection state between a portable terminal and a television device in accordance with a first embodiment;
FIG. 2 is a block diagram of the configurations of the portable terminal and the television device in accordance with the first embodiment;
FIG. 3 is a diagram of a display image displayed on a display component of the television device when position and/or orientation of the portable terminal is changed;
FIG. 4 is a diagram of a display image displayed on the display component of the television device when the content of the portable terminal is reproduced;
FIG. 5 is a flowchart of a display image switching processing in the television device in accordance with the first embodiment;
FIG. 6 is a flowchart of the display image switching processing in the television device when the portable terminal is not compatible with the display image switching processing in FIG. 5;
FIG. 7 is a block diagram of the configurations of a portable terminal and a television device in accordance with a second embodiment;
FIG. 8 is a schematic diagram of the change in a display image corresponding to relative position of the portable terminal with respect to the television device;
FIG. 9 is a schematic diagram of the adjustment of volume corresponding to the relative position of the portable terminal with respect to the television device;
FIG. 10 is a flowchart of a display image switching processing in the television device in accordance with the second embodiment;
FIG. 11 is a diagram illustrating an input operation for setting position of the television device in accordance with a third embodiment;
FIG. 12 is a diagram illustrating a first modification example of the television device in accordance with the first embodiment; and
FIG. 13 is a diagram illustrating a second modification example of the television device in accordance with the first embodiment.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents.

### FIRST EMBODIMENT

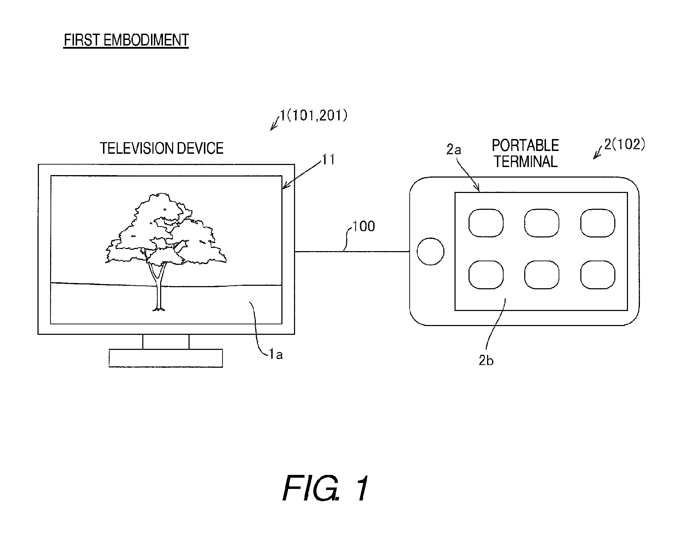

Referring initially to FIGS. 1 to 6, a television device 1 and a portable terminal 2 are illustrated in accordance with a first embodiment. The television device 1 is an example of the "display device" of the present invention.

As shown in FIG. 1, the television device 1 in accordance with the first embodiment is configured to be connected by an MHL™ (mobile high-definition link) cable 100 to a portable terminal 2 that is configured to reproduce content. MHL is an interface standard that allows two devices to be connected with a specific cable (MHL cable) capable of transmitting audio data, video data, and control signals, and thereby linking the devices together. The portable terminal 2 is a multifunction portable terminal, has a plurality of sets of content data, and has software such as a media player that can reproduce these contents. Examples of the "content" here include moving pictures taken from the Internet or an external medium, and photographs or other still pictures captured with a camera. The portable terminal 2 is an example of the "electronic device" of the present invention.

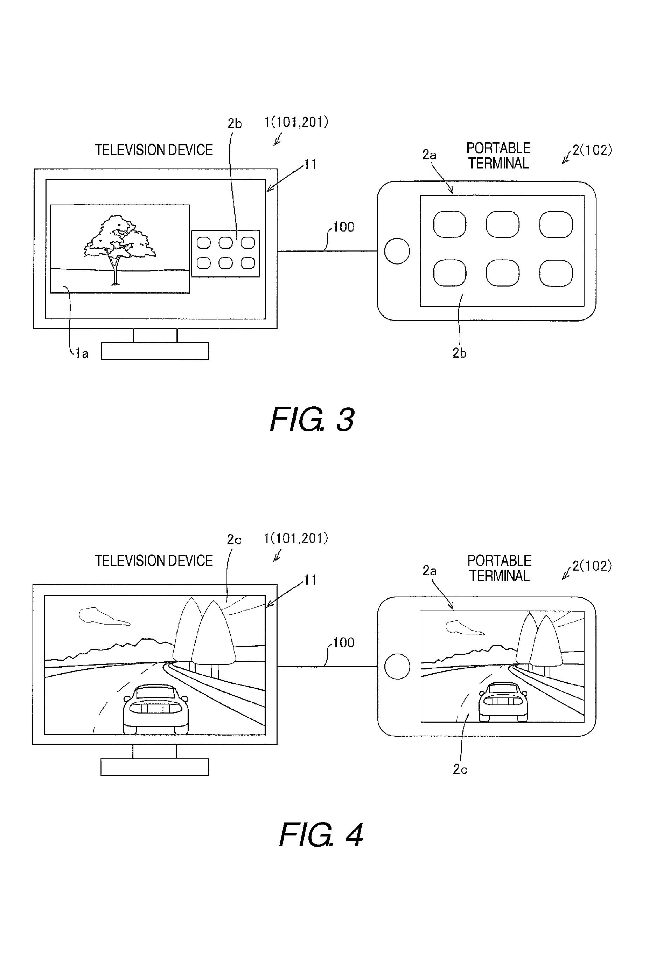

The television device 1 is configured so that during normal operation (when not connected to the portable terminal 2), a television program, video stored on a hard disk, a DVD (digital versatile disc), a BD (Blu-ray Disc™), or another such display image 1a will be displayed on a display component 11. The television device 1 is also configured so that a display image that has been transmitted over the MHL cable 100 and is being displayed on a display screen 2a of the portable terminal 2 can also be displayed on the display component 11. More specifically, the television device 1 is configured so that a display image 2b of the portable terminal 2 when no content is being reproduced, such as a home screen and the like, and a display image 2c of the portable terminal 2 when content is being reproduced (discussed below; see FIG. 4) can be displayed on the display component 11. Even more specifically, the television device 1 is configured so that the display image 1a that has been originally displayed on the television device 1 and the display image 2b of the portable terminal 2 when no content is being reproduced can be displayed at the same time on the display component 11. In this first embodiment, three different situations will be described: when just the display image 1a is displayed on the display component 11, when both the display image 1a and the display image 2b are displayed on the display component 11, and when just the display image 2c is displayed on the display component 11. The processing for displaying the display images 1a, 2b, and 2c on the display component 11 will be discussed in detail below. The television device 1 shown in FIG. 1 is depicted in a situation in which just the display image 1a is displayed on the display component 11. The display screen 2a is an example of the "electronic device-side display screen" of the present invention. The display images 2b and 2c are examples of the "electronic device-side display image" of the present invention.

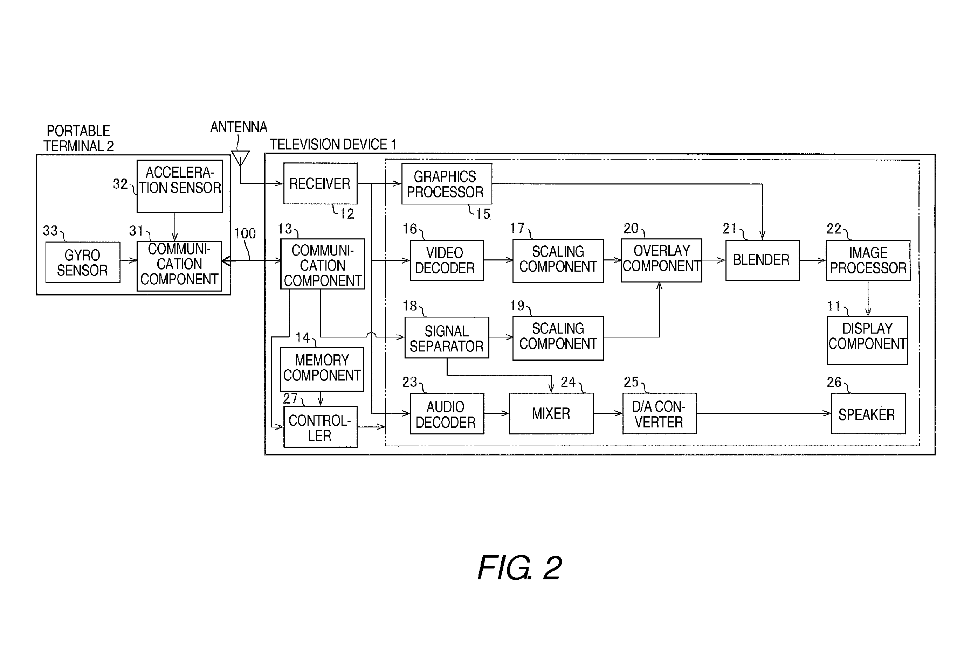

Next, the constituent elements of the television device 1 and the portable terminal 2 will be described through reference to FIG. 2. As shown in FIG. 2, the television device 1 includes a receiver 12, a communication component 13, a memory component 14, a graphics processor 15, a video decoder 16, a scaling component 17, a signal separator 18, a scaling component 19, an overlay component 20, a blender 21, an image processor 22, and the display component 11. The television device 1 also includes an audio decoder 23, a mixer 24, a D/A converter 25, a speaker 26, and a controller 27.

The receiver 12 receives broadcast waves through an antenna. The receiver 12 also separates the received broadcast waves from encoded audio signals, encoded video signals, and SI (service information) signals forming an EPG (electronic program guide). The receiver 12 then outputs them to the audio decoder 23, the video decoder 16, and the graphics processor 15, respectively. EPG here refers to a service provided for the purpose of assisting in program selection (viewing and recording) by the viewer of the television programs. SI refers to information such as the start time and duration of television programs, program titles, program content, and so forth. The EPG is formed by this various information, and the display of program lists and program contents, program searching, and other such services are provided to the viewer.

The communication component 13 communicates with the communication component 31 of the portable terminal 2 via the MHL cable 100. The communication component 13 also acquires information such as control signals, audio signals, and video signals for the portable terminal 2 from the portable terminal 2 via the MHL cable 100. The communication component 13 also outputs information about the acquired video and audio signals to the signal separator 18. The communication component 13 also outputs information about the acquired control signals to the controller 27. The controller 27 controls the various constituent elements of the television device 1 (surrounded by a two-dot chain line in the drawing) so as to display a specific display image on the display component 11 based on these control signals.

The memory component 14 stores recorded video and other such data, various kinds of program, and the like. The memory component 14 also stores programs capable of executing the processing for displaying the display images 2b and 2c on the display component 11 (discussed below), and provides these programs to the controller 27.

The graphics processor 15 analyzes the contents of an SI signal, configures an EPG based on the analyzed SI signal, and outputs the result to the blender 21.

The video decoder 16 decodes the encoded video signals of broadcast waves, and outputs the result to the scaling component 17.

The scaling component 17 is configured so that if only the display image 1a (see FIG. 1) of the television device 1 is displayed on the display component 11, then the video (the display image 1a) based on the video signal decoded by the video decoder 16 is scaled (expanded or compressed) to the proper size so as to match the screen size of the display component 11 of the television device 1. Also, the scaling component 17 is configured so that if the display image 1a that has been originally displayed on the television device 1 and the display image 2b (see FIG. 3) of the portable terminal 2 when no content is being reproduced are both displayed at the same time on the display component 11, then the display image 1a is scaled to the proper size so as to allow both display images 1a and 2b to be displayed on the display component 11. Also, the scaling component 17 is configured so that if only the display image 2c (see FIG. 4) of the portable terminal 2 when no content is being reproduced is displayed on the display component 11, then no information about the display image 1a will be outputted to the overlay component 20.

The signal separator 18 separates the video and audio signals of the portable terminal 2 acquired via the MHL cable 100, and outputs a video signal and an audio signal to the scaling component 19 and the mixer 24, respectively.

The scaling component 19 is configured so that if only the display image 2c (see FIG. 4) of the portable terminal 2 when no content is being reproduced is displayed on the display component 11, then the video (the display image 2c) of the portable terminal 2 is scaled (expanded or compressed) to the proper size so as to match the screen size of the display component 11 of the television device 1. Also, the scaling component 19 is configured so that if the display image 1a that has been originally displayed on the television device 1 and the display image 2b (see FIG. 3) of the portable terminal 2 when no content is being reproduced are both displayed at the same time on the display component 11, then the display image 2b is scaled to the proper size so as to allow both display images to be displayed on the display component 11. Also, the scaling component 19 is configured so that if only the display image 1a of the television device 1 is displayed on the display component 11, then no information about the display image 2b will be outputted to the overlay component 20.

The overlay component 20 produces a display image that is superposed (displayed) on the screen of the display component 11 based on information related to the display image inputted from the scaling component 17 and/or the scaling component 19.

The blender 21 blends or combines the display image outputted from the overlay component 20 with the EPG display image outputted from the graphics processor 15.

The image processor 22 corrects or adjusts the display image displayed on the display component 11. Specifically, the image processor 22 corrects brightness, color, contrast, and other aspects of image quality. The display image that has undergone image quality correction by the image processor 22 is then displayed on the display component 11.

The audio decoder 23 decodes the encoded audio signals included in broadcast waves, and outputs the result to the mixer 24.

The mixer 24 inputs broadcast wave audio signals from the audio decoder 23 and audio signals of the portable terminal 2 from the signal separator 18. The mixer 24 also outputs broadcast wave audio signals to the D/A converter 25 when only the display image 1a (see FIG. 1) of the television device 1 is displayed on the display component 11, and when the display image 1a originally displayed on the display device 1 and the display image 2b (see FIG. 3) of the portable terminal 2 when no content is being reproduced are both displayed at the same time on the display component 11. The mixer 24 also outputs the audio signals of the portable terminal 2 to the D/A converter 25 when only the display image 2c (see FIG. 4) of the portable terminal 2 when no content is being reproduced is displayed on the display component 11.

The D/A converter 25 converts the audio signal outputted from the mixer 24, which is a digital signal, into an analog signal.

The speaker 26 outputs to the outside the audio signals inputted from the D/A converter 25.

The controller 27 controls the various constituent elements of the television device 1 (surrounded by a two-dot chain line in the drawing) based on control signals acquired from the portable terminal 2 via the communication component 13. In the illustrated embodiment, the controller 27 includes a microprocessor or a microcomputer with a control program that controls various components of the television device 1. The controller 27 can also include other conventional components such as an input interface circuit, an output interface circuit, and storage devices such as a ROM (Read Only Memory) device and a RAM (Random Access Memory) device. The microcomputer of the controller is programmed to control the various components of the television device 1. The memory circuit stores processing results and control programs that are run by the microcomputer. The internal RAM of the controller 27 stores statuses of operational flags and various control data. The internal ROM of the controller 27 stores the programs for various operations. The controller 27 is capable of selectively controlling any of the components of the television device 1 in accordance with the control program. It will be apparent to those skilled in the art from this disclosure that the precise structure and algorithms for the controller 27 can be any combination of hardware and software that will carry out the functions of the present invention.

As shown in FIG. 2, the portable terminal 2 includes the communication component 31, an acceleration sensor 32, and a gyro sensor 33.

The communication component 31 communicates with the communication component 13 of the television device 1 via the MHL cable 100. The communication component 31 also transmits information such as control signals, audio signals, and video signals of the portable terminal 2 to the television device 1 via the MHL cable 100.

The acceleration sensor 32 senses information related to changes in the position and orientation of the portable terminal 2. More specifically, the acceleration sensor 32 senses the acceleration that accompanies a change when the position of the portable terminal 2 has moved, or when the orientation of the portable terminal 2 has tilted. The acceleration sensor 32 also senses acceleration of the portable terminal 2 in three axes: the X axis, the Y axis, and the Z axis. The acceleration sensor 32 also outputs information related to a sensed change in the position and orientation of the portable terminal 2 to the communication component 31. The communication component 31 then sends the information related to a sensed change in the position and orientation of the portable terminal 2 sensed by the acceleration sensor 32 to the television device 1 as a control signal. The information related to a change in the position and orientation of the portable terminal 2 sensed by the acceleration sensor 32 is an example of the "first information" of the present invention.

The gyro sensor 33 senses information related to a change in the orientation of the portable terminal 2. More specifically, the gyro sensor 33 senses the angular velocity accompanying a change when the portable terminal 2 rotates. The gyro sensor 33 also senses angular velocity corresponding to rotation around three axes: the X axis, the Y axis, and the Z axis of the portable terminal 2. The gyro sensor 33 also outputs to the communication component 31 information related to the sensed change in the orientation of the portable terminal 2. Consequently, the orientation of the portable terminal 2 can be sensed by both the acceleration sensor 32 and the gyro sensor 33. Thus, the orientation of the portable terminal 2 can be accurately determined, as opposed to when the orientation is sensed by the acceleration sensor 32 alone. The communication component 31 then sends information related to a change in the orientation of the portable terminal 2 sensed by the gyro sensor 33 as a control signal to the television device 1. The information related to a change in the orientation of the portable terminal 2 sensed by the gyro sensor 33 is another example of the "first information" of the present invention.

Although not illustrated, the portable terminal 2 also includes various components that are included in conventional portable terminals, such as mobile phones, tablets, personal computers, and the like. Since these components are conventionally known in the art, detailed description will be omitted for the sake of brevity. Also, the portable terminal 2 includes controller having a microprocessor or a microcomputer with a control program that controls various components of the portable terminal 2, such as the communication component 31, an acceleration sensor 32, and a gyro sensor 33, for example. The controller can also include other conventional components such as an input interface circuit, an output interface circuit, and storage devices such as a ROM (Read Only Memory) device and a RAM (Random Access Memory) device. The microcomputer of the controller is programmed to control the various components of the portable terminal 2. The memory circuit stores processing results and control programs that are run by the microcomputer. The internal RAM of the controller stores statuses of operational flags and various control data. The internal ROM of the controller stores the programs for various operations. The controller is capable of selectively controlling any of the components of the portable terminal 2 in accordance with the control program. It will be apparent to those skilled in the art from this disclosure that the precise structure and algorithms for the controller can be any combination of hardware and software that will carry out the functions of the present invention.

Next, a case in which the display images 2b and 2c of the portable terminal 2 are displayed on the display component 11 will be described through reference to FIGS. 1 to 4.

In the first embodiment, as shown in FIG. 1, first the user connects the television device 1 and the portable terminal 2 with the MHL cable 100. At this stage, only the display image 1a is displayed on the display component 11. The user then picks up the portable terminal 2 and starts the content reproduction operation in order to view the content stored in or streamed by the portable terminal 2 on the television device 1. This content reproduction operation involves actuating the software of a media player or the like to start reproducing the content. At this point, the portable terminal 2 held by the user naturally undergoes changes in its position and/or orientation as the user carries out the content reproduction operation. As a result, a change in the position and/or orientation of the portable terminal 2 is sensed by the acceleration sensor and/or the gyro sensor, and the sensing result is sent as a control signal to the television device 1. Information (a control signal) related to the change in position and/or orientation is then acquired by the controller 27 of the television device 1 (see FIG. 2). After this, as shown in FIG. 3, the controller 27 performs control to display the display image 1a originally being displayed on the display device 1 and the display image 2b of the portable terminal 2 when no content is being reproduced, at the same time on the display component 11, based on the acquired information. Specifically, with the television device 1, when there is a change in the position and/or orientation of the portable terminal 2, the display image 1a and the display image 2b are automatically displayed at the same time on the display component 11 without any user operations inputted by the user through a touch screen, an input button, or any other input means of the portable terminal 2.

The user then performs an operation to reproduce the content of the portable terminal 2 through the touch screen, input button or any other input means of the portable terminal 2, and the content of the portable terminal 2 is reproduced. Consequently, a control signal indicating that the content is being reproduced at the portable terminal 2 is sent to the television device 1. Information (a control signal) related to the content reproduction state is then acquired by the controller 27 of the television device 1, and as shown in FIG. 4, only the display image 2c of the portable terminal 2 when no content is being reproduced is displayed, over the entire region (the whole screen) of the display component 11, based on this acquired information. That is, with the television device 1, when the content of the portable terminal 2 is reproduced, the display image 2c is displayed over the whole screen of the display component 11. Information related to the content reproduction state of the portable terminal 2 is an example of the "second information" of the present invention.

The above-mentioned display image switching processing (flowchart) will now be described through reference to FIGS. 1 to 6.

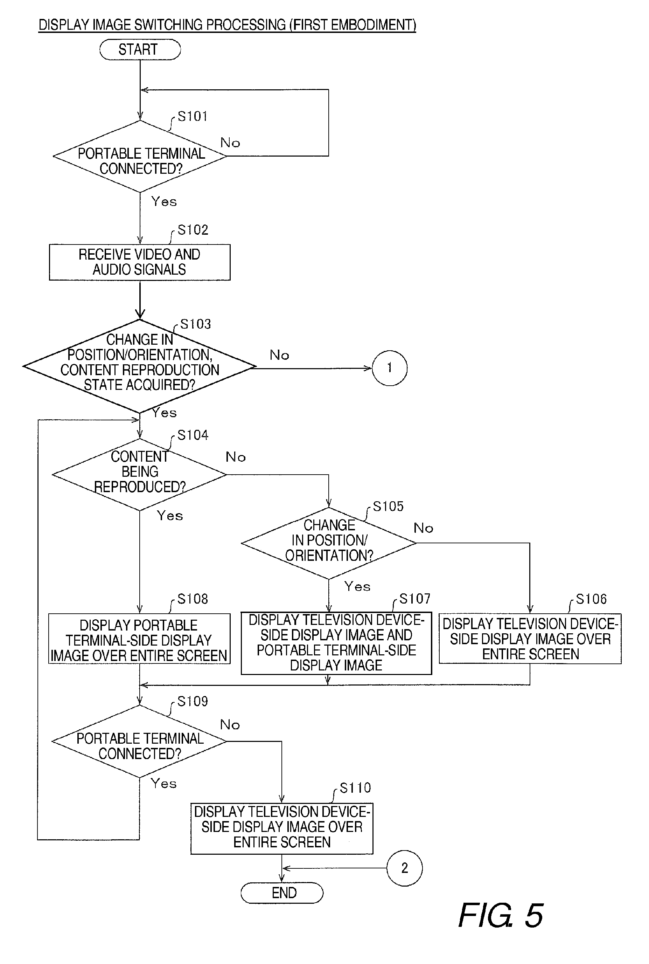

First, as shown in FIG. 5, in step S101, the controller 27 (see FIG. 2) determines whether or not the portable terminal 2 (see FIG. 2) is in a connected state. If the portable terminal 2 is determined not to be in a connected state, then the processing of step S101 is repeated.

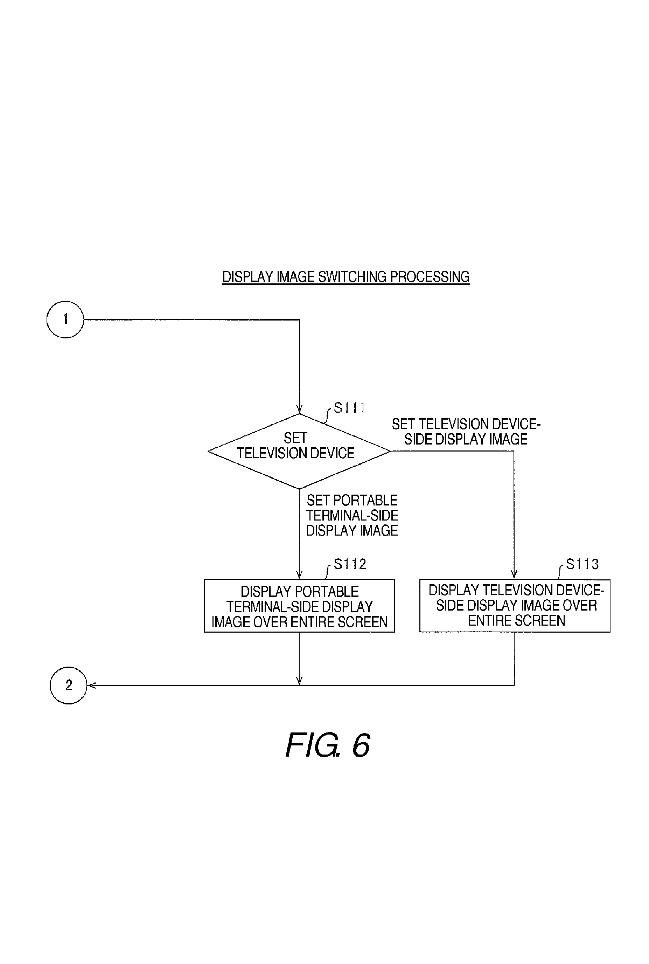

If the portable terminal 2 is determined to be in a connected state, then in step S102 the communication component 13 (see FIG. 2) acquires the audio signal and the video signal of the portable terminal 2. Then, in step S103, the controller 27 determines whether or not at least one of the information related to a change in the position and/or orientation of the portable terminal 2 and the information related to the content reproduction state has been acquired. If the information related to a change in the position and/or orientation of the portable terminal 2 and the information related to the content reproduction state have not been acquired, then the flow proceeds to step S111 (see FIG. 6). Here, an example of a situation in which the information related to a change in the position and/or orientation of the portable terminal 2 and the information related to the content reproduction state have not been acquired is a situation in which the television device 1 has been connected to a portable terminal that is not compatible with display image switching processing (i.e., one that does not send out a compatible control signal).

If at least one of the information related to a change in the position and/or orientation of the portable terminal 2 and the information related to the content reproduction state has been acquired, then it is determined that the portable terminal is compatible with display image switching processing, and the flow proceeds to step S104. Then, in step S104, the controller 27 determines whether or not the content is being reproduced by the portable terminal 2. If it is determined that the content is not being reproduced (a non-reproduction state) based on the information related to the content reproduction state or the information related to the content reproduction state is not acquired, then in step S105 the controller 27 determines whether or not there is a change in the position and/or orientation of the portable terminal 2. If it is determined that there is no change in the position and/or orientation of the portable terminal 2, then in step S106 the display image 1a (see FIG. 1) of the television device 1 (see FIG. 2) is displayed over the entire screen of the display component 11 (see FIG. 2) by the controller 27. More specifically, in step S106, if the display image 1a has been displayed on the display component 11, then the display image 1a continues to be displayed. On the other hand, if the display image 2b (see FIG. 3) or 2c (see FIG. 4) of the portable terminal 2 has been displayed on the display component 11, then processing is performed to switch to the display image 1a. That is, if the user has finished viewing the content, for example, then the display image 1a that has been originally displayed on the television device 1 will be displayed by the controller 27 without the user having to perform any special operation.

Also, in step S105, if it is determined that there is a change in the position and/or orientation of the portable terminal 2, then in step S107 the display image 1a that has been displayed on the television device 1 and the display image 2b of the portable terminal 2 are displayed by the controller 27 on the display component 11. The processing of this step S107 is usually executed when the user performs an operation to reproduce content after connecting the television device 1 and the portable terminal 2.

Also, in step S104, if it is determined that the content is being reproduced (reproduction state) based on the information related to the content reproduction state, then in step S108 the display image 2c of the portable terminal 2 when content is being reproduced is displayed on the entire screen of the display component 11 by the controller 27. That is, in step S108 the display image 2c of the portable terminal 2 when content is being reproduced is displayed on the entire screen of the display component 11 by the controller 27 based on the information related to the content reproduction state of the portable terminal 2, regardless of any change in the position and/or orientation of the portable terminal 2.

After the display image corresponding to the display component 11 is displayed in step S106, S107, or S108, in step S109 the controller 27 determines whether or not the portable terminal 2 is again in a connected state. If the portable terminal 2 is determined to be in a connected state, then the processing from step S104 onward is repeated. On the other hand, if the portable terminal 2 is determined not to be in a connected state, then in step S110 the display image 1a of the television device 1 is displayed on the entire screen of the display component 11 by the controller 27.

In step S103, if the information related to a change in the position and/or orientation of the portable terminal 2 and the information related to the content reproduction state have not been acquired, then as shown in FIG. 6, in step S111 the user performs an operation to select the display image on the television device 1 (input source selection), and thereby setting the display image displayed on the display component 11. If the user decides to display the display image of the portable terminal 2 (either the display image 2b or 2c), then in step S112 the display image of the portable terminal 2 (the display image 2b or 2c) is displayed on the entire screen of the display component 11 by the controller 27. Also, if the user decides to display the display image 1a of the television device 1, then in step S113 the display image 1a of the television device 1 is displayed on the entire screen of the display component 11 by the controller 27. The display image switching processing of the television device 1 in the first embodiment of the present invention is executed in this manner.

The following effects are obtained with the first embodiment.

As discussed above, in the first embodiment, the controller 27 acquires the information related to a change in the position and/or orientation of the portable terminal 2, and performs control to display the display image 2b displayed on the display screen 2a of the portable terminal 2, on the display component 11 of the television device 1, based on the acquired information related to a change in the position and/or orientation of the portable terminal 2. Therefore, the display image 2b of the portable terminal 2 can be displayed on the display component 11 based on the change in the position and/or orientation of the portable terminal 2 that occurs when the user picks up the portable terminal 2 (when the user wants to display the content of the portable terminal 2 on the display component 11). Consequently, there is no need for any operation such as video selection (input source selection), and the user can go ahead and perform a content reproduction operation to view the display image 2c of the portable terminal 2 as content. As a result, the operation for displaying the content of the portable terminal 2 on the display component 11 of the television device 1 is less likely to be complicated, so user convenience can be improved.

Also, in the first embodiment, as discussed above, the controller 27 is configured so that if it is determined that there has been a change in the position and/or orientation of the portable terminal 2 based on the information related to the position and/or orientation of the portable terminal 2, then control is performed to display the display image 2b of the portable terminal 2 on the display component 11. Consequently, the display on the display component 11 can be performed flexibly corresponding to any position changes or orientation changes that occur when the user performs an operation to display the display image 2c of the portable terminal 2 (as content of the portable terminal 2) on the display component 11 of the television device 1, and this improves user convenience.

Also, in the first embodiment, as discussed above, the controller 27 is configured so that if it is determined that there has been a change in the position and/or orientation of the portable terminal 2 based on the information related to a change in the position and/or orientation of the portable terminal 2, then control is performed to display both the display image 1a that has been displayed on the display component 11 and the display image 2b of the portable terminal 2 on the display component 11. Consequently, the user can see both the display image 1a of the television device 1 and the display image 2b of the portable terminal 2 on the single display component 11 of the television device 1 at the same time. Also, since the display image 2b of the portable terminal 2 can be displayed on the display component 11 ahead of the display image 2c when the content of the portable terminal 2 is reproduced, another user besides the user operating the portable terminal 2 can be notified ahead of time that the content of the portable terminal 2 is being viewed.

Also, in the first embodiment, as discussed above, the controller 27 is configured so that the information related to the content reproduction state of the portable terminal 2 is acquired, and if it is determined that the content of the portable terminal 2 is being reproduced based on the information related to the content reproduction state of the portable terminal 2, then control is performed to display the display image 2c of the portable terminal 2 on the display component 11 regardless of the information related to a change in the position and/or orientation of the portable terminal 2. Consequently, even if the information related to a change in the position and/or orientation of the portable terminal 2 cannot be acquired, the display image 2c of the portable terminal 2 can still be reliably displayed on the display component 11 based on the information related to the content reproduction state of the portable terminal 2. Also, if the content of the portable terminal 2 is being reproduced, then the display image 2c of the portable terminal 2 can be displayed on the display component 11 of the television device 1 without the user having to perform any special operation. This keeps the operation for displaying the content of the portable terminal 2 on the display component 11 of the television device 1 from becoming too complicated, so user convenience can be improved.

Also, in the first embodiment, as discussed above, the controller 27 is configured so that if it is determined that the content of the portable terminal 2 is being reproduced based on the information related to the content reproduction state of the portable terminal 2, then control is performed to display the display image 2c of the portable terminal 2 over the entire region (entire screen) of the display component 11. Consequently, the user can view the display image 2c of the portable terminal 2 as content in a full-screen display state without having to perform any special operation, and merely by reproducing the content of the portable terminal 2. This further improves user convenience.

Also, in the first embodiment, as discussed above, the controller 27 is configured so that if it is determined based on the information related to the content reproduction state of the portable terminal 2 that the content of the portable terminal 2 is not being reproduced, and if it is determined based on the information related to a change in the position and/or orientation of the portable terminal 2 that there has been no change in the position and/or orientation of the portable terminal 2, then control is performed to display on the display component 11 the display image 1a of the television device 1 that was being displayed on the display component 11 before the display image 2c of the portable terminal 2 that is being displayed on the display component 11 during content reproduction. Consequently, if there is no need to display the display image 2b or 2c of the portable terminal 2 on the display component 11, such as after the reproduction (viewing) of the content is finished, then the display image 1a of the television device 1 that was originally being displayed prior to the display image 2c of the portable terminal 2 displayed on the display component 11 during reproduction can be displayed (restored) on the display component 11 without the user performing any special operation. This keeps the display switching operation for the television device 1 from becoming too complicated, so user convenience can be further improved.

Also, in the first embodiment, as discussed above, the controller 27 is configured so that if it is determined that the portable terminal 2 has not been connected via the communication component 13, then control is performed to display on the display component 11 the display image 1a of the television device 1 that was displayed on the display component 11 prior to the display image 2c of the portable terminal 2 that is displayed on the display component 11 during content reproduction. Consequently, even if the portable terminal 2 and the television device 1 have been disconnected, the display image 1a of the television device 1 that was originally being displayed prior to the display image 2c of the portable terminal 2 displayed on the display component 11 during reproduction can be displayed (restored) on the display component 11 without the user performing any special operation. This also improves user convenience.

### SECOND EMBODIMENT

Referring now to FIGS. 4 and 7 to 10, a television device 101 and a portable terminal 102 are illustrated in accordance with a second embodiment. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

Basically, the television device 101 and the portable terminal 102 in accordance with the second embodiment are identical to the television device 1 and the portable terminal 2, respectively, except that the television device 101 and the portable terminal 102 respectively include GPS (global positioning system) sensors 128 and 134, and that the display image and the outputted volume are adjusted based on the relative position of the portable terminal 102 with respect to the television device 101. The television device 101 is an example of the "display device" of the present invention. The portable terminal 102 is an example of the "electronic device" of the present invention.

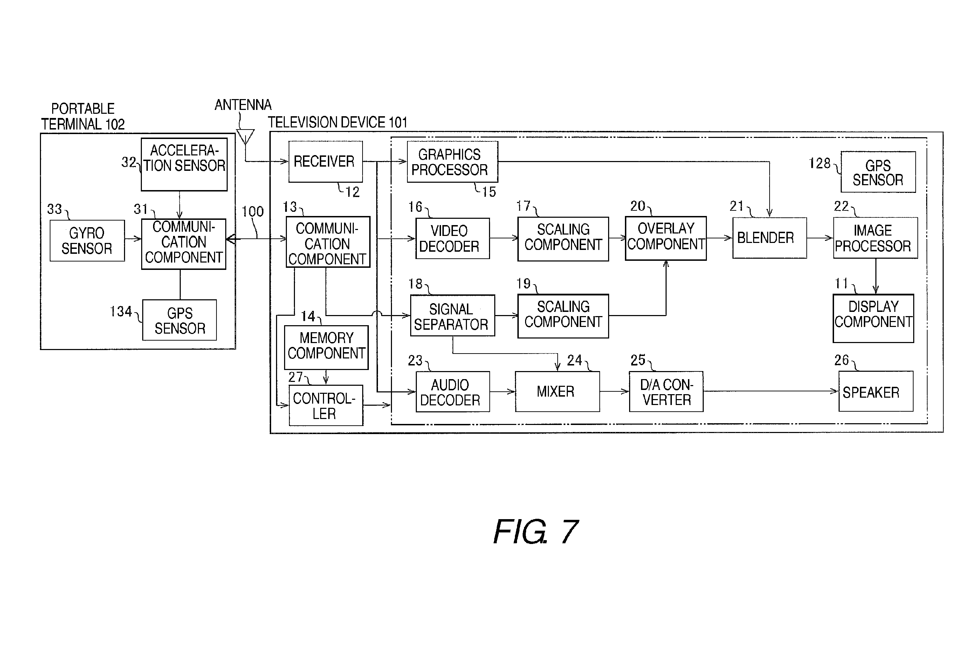

As shown in FIG. 7, the television device 101 includes the GPS sensor 128 for sensing the position of the television device 101 on the earth. Also, the portable terminal 102 is similar to the television device 101 in that it includes the GPS sensor 134 for sensing the position of the portable terminal 102 on the earth. The portable terminal 102 is configured so that information related to its own position (the position of the portable terminal 102) acquired by the GPS sensor 134 can be sent as a control signal to the television device 1 via the communication component 31. Those components that are the same as in the first embodiment above (shown in FIG. 2) will be numbered the same here and not described again.

With the television device 101, the controller 27 acquires information related to the position of the portable terminal 102 received as a control signal. The controller 27 also calculates the relative position of the portable terminal 102 with respect to the television device 101 from the acquired position of the portable terminal 102 and its own position (the position of the television device 101) sensed by the GPS sensor 128. Information related to the position of the portable terminal 102 here is an example of the "third information" of the present invention.

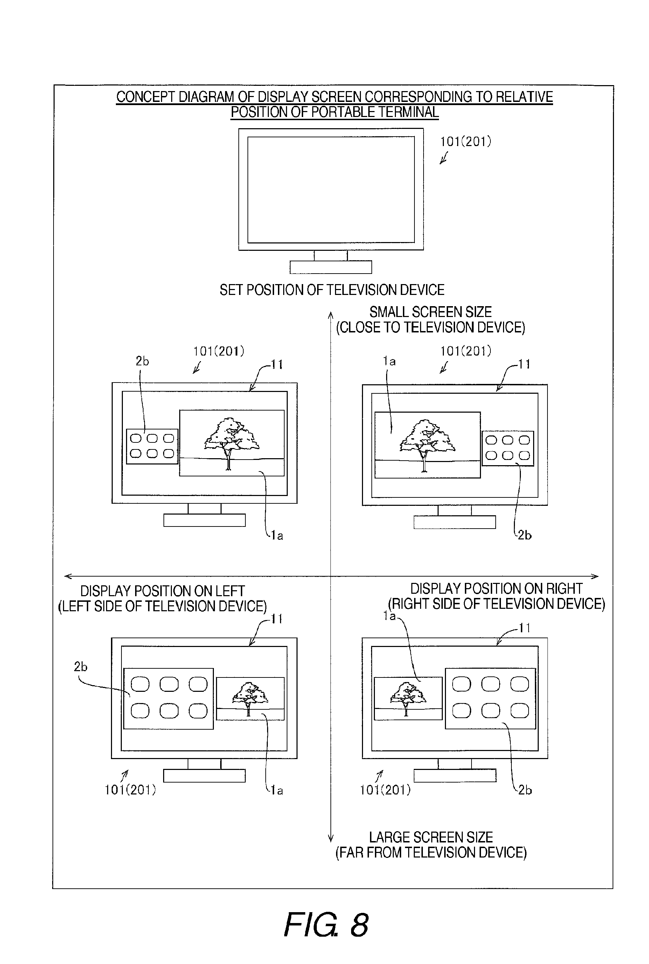

In this second embodiment, the controller 27 change the volume outputted by the speaker 26 and the display image displayed on the display component 11 based on the relative position of the portable terminal 102 with respect to the television device 101. More specifically, as shown in FIG. 8, the controller 27 is configured so that if it is determined that the display image 1a of the television device 101 and the display image 2b of the portable terminal 102 are being displayed on the display component 11, then the display size and display position of the display image 2b of the portable terminal 102 on the display component 11 will be changed based on the relative position of the portable terminal 102 with respect to the television device 101. Also, for the display image 1a, the display size and display position vary when there is a change in the display image 2b as shown in FIG. 8. However, in the following explanation, only the change in the display image 2b will be discussed here in order to keep the explanation simple.

Specifically, as shown in FIG. 8, the controller 27 performs control to display the display image 2b on the right side relative to the display image 1a when the portable terminal 102 is disposed on the right side relative to the horizontal center of the television device 101, and to display the display image 2b on the left side relative to the display image 1a when the portable terminal 102 is disposed on the left side relative to the horizontal center of the television device 101. Thus, in the illustrated embodiment, the controller 27 arranges the display image 2b on one side (e.g., the right side or the left side) relative to the display image 1a on the display component 11 in response to determining that the portable terminal 102 is located on the one side (e.g., the right side or the left side) relative to the display component 11 based on the relative position of the portable terminal 102 with respect to the display component 11.

Furthermore, as shown in FIG. 8, the controller 27 performs control to display the display image 2b in a smaller size than the display image 1a when the portable terminal 102 is relatively close to the television device 101, and to display the display image 2b in a larger size than the display image 1a when relatively far away. For example, the controller 27 determines that the portable terminal 102 is relatively close to the television device 101 when the distance between the portable terminal 102 and the television device 101 is less than a predetermined distance, while the controller 27 determines that the portable terminal 102 is relatively far away from the television device 101 when the distance between the portable terminal 102 and the television device 101 is more than a predetermined distance. Thus, in the illustrated embodiment, the controller 27 performs control to display the display image 2b smaller than the display image 1a on the display component 11 in response to determining that distance between the portable terminal 102 and the display component 11 is less than the predetermined distance based on the relative position of the portable terminal 102 with respect to the display component 11.

Alternatively, the controller 27 can vary the display size of the display image 2b relative to the display image 1a in a different manner. In particular, the controller 27 can perform control to increase the display size of the display image 2b and decrease the display size of the display image 1a correspondingly on the display component 11 as the distance between the portable terminal 102 and the display component 11 increases. On the other hand, the controller 27 can perform control to decrease the display size of the display image 2b and increase the display size of the display image 1a correspondingly on the display component 11 as the distance between the portable terminal 102 and the display component 11 decreases.

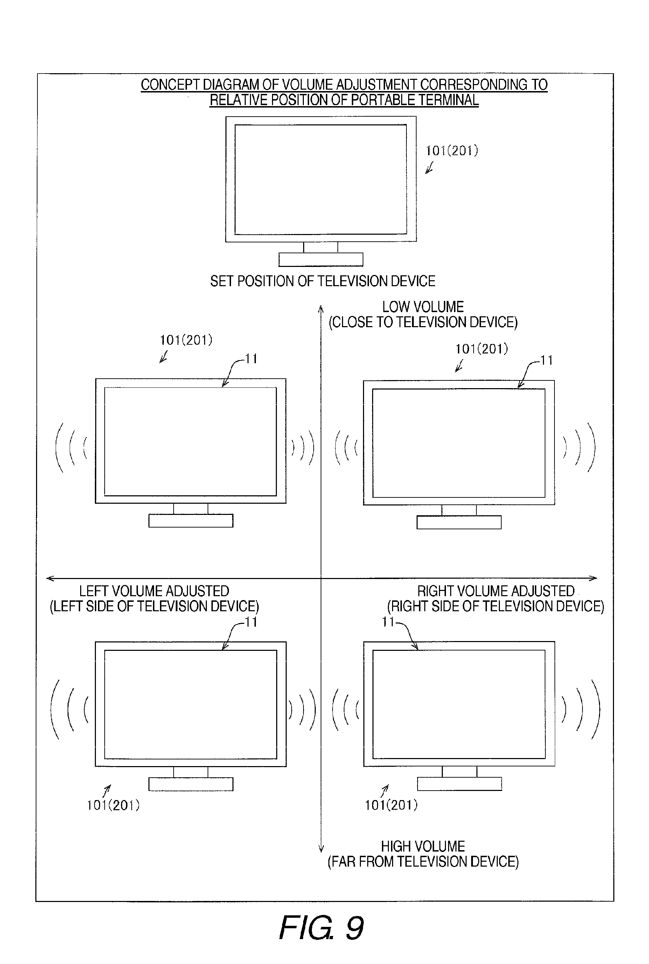

Also, in the second embodiment, the volume outputted by the speaker 26 can be varied according to the relative position. In particular, the controller 27 performs control to output a higher volume on the right side than the left side when the portable terminal 102 is to the right of the television device 101 as shown in FIG. 9, and to output a higher volume on the left side than the right side when the portable terminal 102 is to the left. Thus, in the illustrated embodiment, the controller 27 sets the volume of the audio on one side larger than the other side in response to determining that the portable terminal 102 is located on the one side relative to the display component 11 based on the relative position of the portable terminal 102 with respect to the display component 11.

The controller 27 also performs control to output a lower volume on the left and right sides when the portable terminal 102 is relatively close to the television device 101, and to output a higher volume on the left and right sides when the portable terminal 102 is relatively far away. Thus, in the illustrated embodiment, the controller 27 increases the volume of the audio as the distance between the portable terminal 102 and the display component 11 becomes larger. On the other hand, the controller 27 decreases the volume of the audio as the distance between the portable terminal 102 and the display component 11 becomes smaller.

The display image switching processing (flowchart) in this second embodiment will now be described through reference to FIGS. 4, 7, 8, and 10. The processing that is the same as in the first embodiment above shown in FIGS. 5 and 6 will be numbered the same and will not be described again.

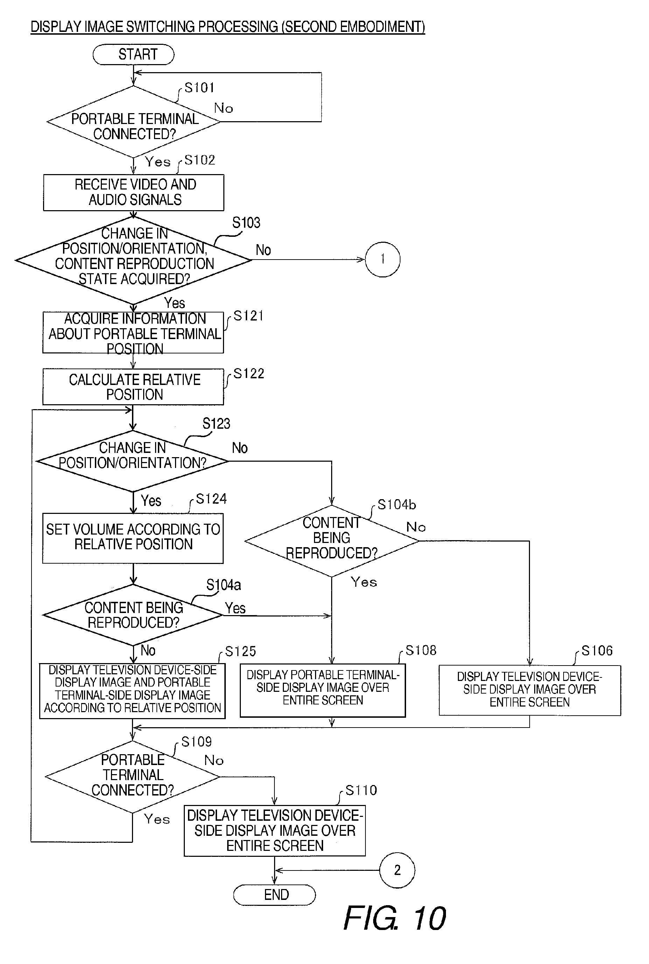

As shown in FIG. 10, in step S103, if at least one of the information related to a change in the position and/or orientation of the portable terminal 102 (see FIG. 7) and the information related to the content reproduction state have been acquired, then it is determined that the portable terminal is compatible with display image switching processing, and the flow proceeds to step S121. Then, in step S121 the controller 27 (see FIG. 7) acquires, via the communication component 13 (see FIG. 7), the information related to the position of the portable terminal 102 sensed by the GPS sensor 134 (see FIG. 7). Then, in step S122 the controller 27 calculates the relative position of the portable terminal 102 with respect to the television device 101.

Then, in step S123 the controller 27 determines whether or not there is a change in the position and/or orientation of the portable terminal 102. If there is no change in the position and/or orientation of the portable terminal 102, in step S104b the controller 27 determines whether or not content is being reproduced by the portable terminal 102, as in step S104 in FIG. 5.

Also, if there is a change in the position and/or orientation of the portable terminal 102, then in step S124 the controller 27 adjusts the volume outputted from the speaker 26 according to the relative position of the portable terminal 102 with respect to the 101, and sets the adjusted volume. Then, in step S104a the controller 27 determines whether or not content is being reproduced by the portable terminal 102, as in step S104 in FIG. 5. If it is determined that content is being reproduced (a reproduction state), then the flow proceeds to step S108, and the display image 2c (see FIG. 4) of the portable terminal 102 when content is being reproduced is displayed over the entire screen of the display component 11 (see FIG. 7) by the controller 27. In this case, audio with a volume corresponding to the relative position of the portable terminal 102 with respect to the television device 101 set in step S124 is outputted by the speaker 26.

Also, if it has been determined in step S104a that no content is being reproduced (a non-reproduction state), then in step S125 the display image 2b (see FIG. 8) of the portable terminal 102 in which the display size and display position have changed according to the relative position of the portable terminal 102 with respect to the television device 101, and the display image 1a (see FIG. 8) of the television device 101 are displayed by the controller 27 on the display component 11. The subsequent processing is the same as in steps S109 and S110 in FIG. 5. The same applies to steps S111 to S113 in FIG. 6.

The rest of the configuration in the second embodiment is the same as in the first embodiment above.

The following effects can be obtained with the second embodiment.

As discussed above, in the second embodiment, the controller 27 is configured so that when the display image 1a of the television device 101 and the display image 2b of the portable terminal 102 are both displayed on the display component 11, the information related to the relative position of the portable terminal 102 with respect to the display component 11 of the television device 101 (the information related to the position of the portable terminal 102 sensed by the GPS sensor 134) is acquired. Furthermore, the relative position of the portable terminal 102 with respect to the display component 11 is determined based on the information related to the relative position of the portable terminal 102 with respect to the display component 11 (the television device 101). Then, the display position and display size of the display image 2b of the portable terminal 102 on the display component 11 are changed according to the determined relative position of the portable terminal 102 with respect to the display component 11. Consequently, the relative position of the user (who is presumed to be near the portable terminal 102) with respect to the display component 11 can be estimated (assumed) by determining the relative position of the portable terminal 102 with respect to the display component 11. Consequently, the display position and the display size of the display image 2b of the portable terminal 102 on the display component 11 relative to the display image 1a can be appropriately changed according to the estimated relative position of the user with respect to the display component 11. As a result, the user can obtain the proper display image 2b of the portable terminal 102 corresponding to the relative position of the user with respect to the display component 11.

Also, in the second embodiment, as discussed above, the controller 27 is configured so that the information related to the relative position of the portable terminal 102 with respect to the display component 11 is acquired. The relative position of the portable terminal 102 with respect to the display component 11 is determined based on the information related to the relative position of the portable terminal 102 with respect to the display component 11. Then, the volume of audio outputted from the speaker 26 is changed according to the determined relative position of the portable terminal 102 with respect to the display component 11. Consequently, the relative position of the user with respect to the display component 11 can be estimated from the relative position of the portable terminal 102 with respect to the display component 11, and audio can be outputted in the proper volume according to the estimated relative position of the user with respect to the display component 11.

The other effects of the second embodiment are the same as in the first embodiment above.

### THIRD EMBODIMENT

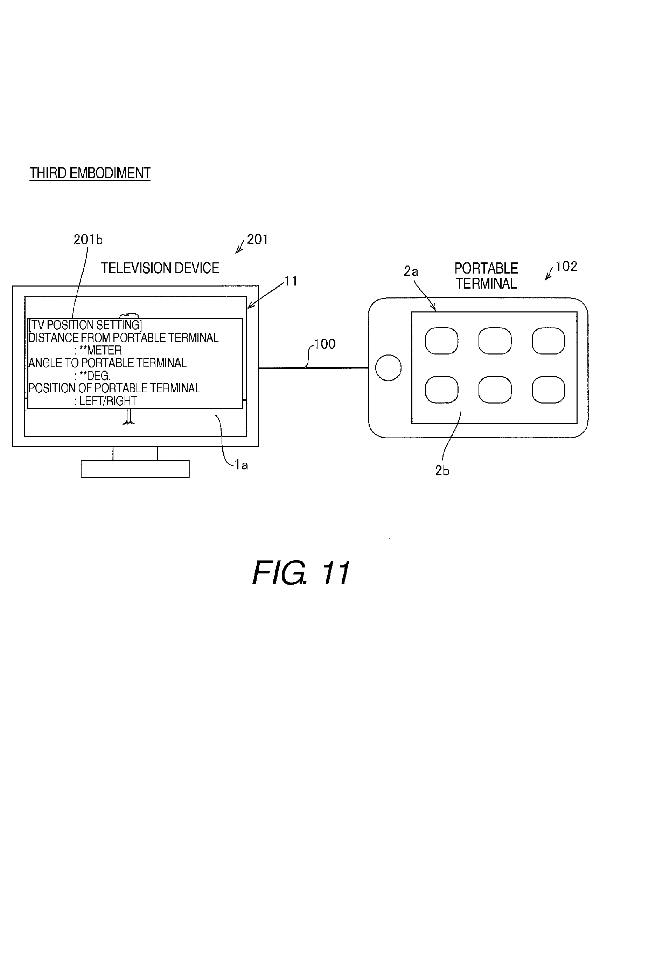

Referring now to FIGS. 7 and 11, a television device 201 is illustrated in accordance with a third embodiment. In view of the similarity between the first to third embodiments, the parts of the third embodiment that are identical to the parts of the first and second embodiments will be given the same reference numerals as the parts of the first and second embodiments. Moreover, the descriptions of the parts of the third embodiment that are identical to the parts of the first and second embodiments may be omitted for the sake of brevity.

Basically, the television device 201 in accordance with the third embodiment is identical to the television device 101, except that the television device 201 does not have a GPS sensor.

In this third embodiment, as shown in FIG. 11, the television device 201 is configured so that a setting menu image 201b for inputting information about the current position of the television device 201 with respect to the portable terminal 102 is displayed in a state in which the portable terminal 102 has been connected via the MHL cable 100.

When this setting menu image 201b is displayed, the user can use a remote control that comes with the television device 201 to set the current position of the television device 201 with respect to the portable terminal 102. More specifically, the user can input information such as the distance from the portable terminal 102 to the center part of the television device 201 (near the center of the display component 11), the angle formed by the portable terminal 102 and the display component 11 when the parabolic direction of the display component 11 with respect to the screen is zero degrees, and whether the portable terminal 102 is on the left or right side of the center of the display component 11. As a result, the current relative position of the portable terminal 102 and the television device 201 can be defined. Thereafter, the relative position of the portable terminal 102 and the television device 201 can be more accurately determined by the controller 27 (see FIG. 7) by correcting the change in the position of the portable terminal 102 sensed by the GPS sensor 134 (see FIG. 7) based on the defined relative position.

The rest of the configuration in the third embodiment is the same as in the second embodiment above.

The following effects can be obtained with the third embodiment.

As discussed above, in the third embodiment, the position of the television device 201 with respect to the portable terminal 102 is set by the user, so even though the television device 201 is not equipped with a GPS sensor, the relative position of the portable terminal 102 with respect to the television device 201 can be determined just as in the second embodiment. Therefore, control to change the display position and the display size of the display image 2b of the portable terminal 102, and control to adjust the volume can be performed according to the relative position of the portable terminal 102 with respect to the television device 201.

The other effects of the third embodiment are the same as in the second embodiment above.

The embodiments disclosed herein are all merely examples, and should not be considered as being limiting in nature. The scope of the present invention is indicated by the claims, and not by the description of embodiments given above, and encompasses all modifications within the equivalent meaning and scope of the claims.

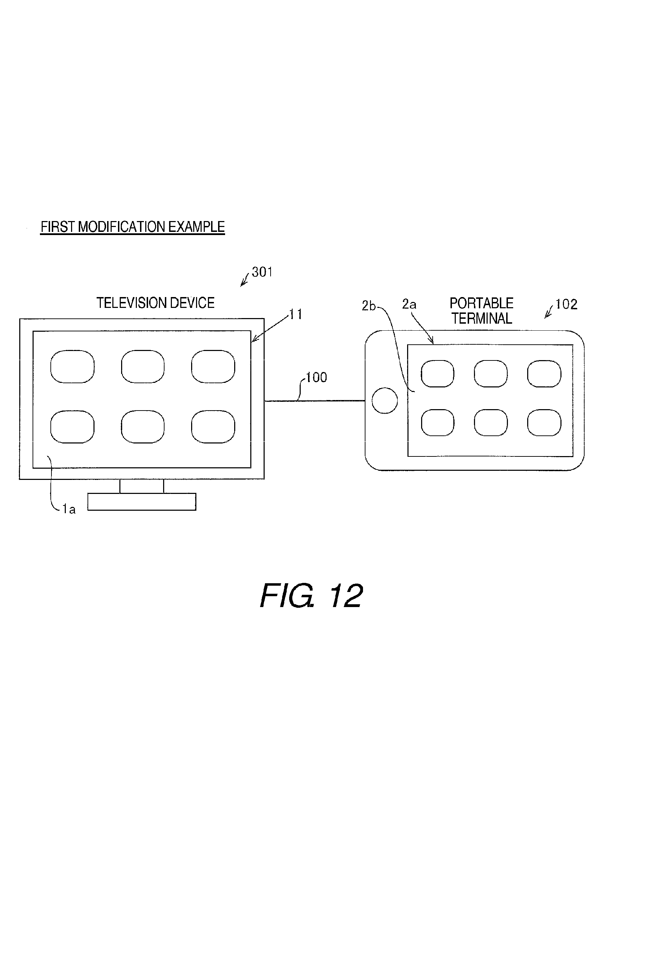

For instance, in the first to third embodiments above, the display image 1a and the display image 2b are displayed on the display component 11 at the same time in the television device 1 (101, 201) based on the information related to a change in the position and/or orientation of the portable terminal 2 (102). However, the present invention is not limited to this. With the present invention, the display image 2b can be displayed over the entire screen of the display component 11 based on the information related to a change in the position and/or orientation, as with the television device 301 in the first modification example shown in FIG. 12.

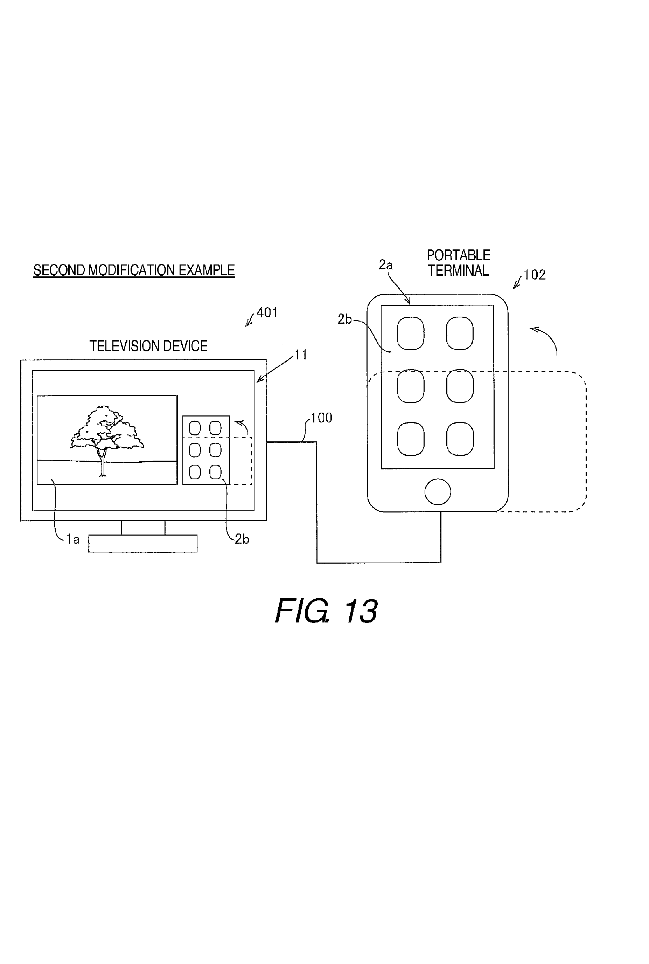

Also, in the second and third embodiments above, the display size and display position of the display image 2b on the display component 11 are changed based on the information related to the relative position of the portable terminal 102 with respect to the display component 11. However, the present invention is not limited to this. With the present invention, the display orientation of the display image 2b displayed on the display component 11 can be changed based on a change in the orientation of the portable terminal 102 sensed by the gyro sensor 33 or the acceleration sensor 32, as with the television device 401 in the second modification example shown in FIG. 13. For example, if the orientation of the portable terminal 102 is horizontal, then the display image 2b that is oriented horizontally can be displayed on the display component 11, while if the orientation of the portable terminal 102 changes to vertical, then the display image 2b that is oriented vertically can be displayed on the display component 11 to match the change in orientation of the portable terminal 102.

Also, in the first to third embodiments above, the display image 2c of the portable terminal 2 (102) is always displayed over the entire screen of the display component 11 when it is determined that the content of the portable terminal 2 (102) is being reproduced. However, the present invention is not limited to this. With the present invention, even if it is determined that the content of the portable terminal 2 (102) is being reproduced, the display image 1a of the television device 1 (101, 201) and the display image 2c of the portable terminal 2 (102) can both be displayed on the display component 11 at the same time, just as when the position and/or orientation of the portable terminal 2 (102) has changed.

Also, in the first to third embodiments above, the display image 2c is displayed over the entire screen of the display component 11 regardless of any change in the position and/or orientation of the portable terminal 2 (102) if it is determined that the content of the portable terminal 2 (102) is being reproduced. However, the present invention is not limited to this. With the present invention, even if the display image 2c is displayed over the entire screen of the display component 11, the display image 2c and the display image 1a can be displayed at the same time on the display component 11 based on the information related to a change in the position and/or orientation of the portable terminal 2 (102). With this configuration, the user can easily check the display image 1a of the television device 1 (101, 201) even when the content of the portable terminal 2 (102) is being reproduced.

Also, in the first to third embodiments above, changes in the position and/or orientation of the portable terminal 2 (102) are sensed by the acceleration sensor 32 and the gyro sensor 33, but the present invention is not limited to this. With the present invention, changes in the position and/or orientation of the portable terminal 2 (102) can be sensed by just the acceleration sensor 32.

Also, in the first to third embodiments above, the television device 1 (101, 201) and the portable terminal 2 (102) are connected by the MHL cable 100, but the present invention is not limited to this. With the present invention, as long as the television device 1 (101, 201) and the portable terminal 2 (102) can communicate with each other, they can be connected by some connection method other than an MHL cable. For instance, they can be connected by an HDIM™ (high-definition multimedia interface) cable instead of an MHL cable. Also, the connection between the television device 1 (101, 201) and the portable terminal 2 (102) can be either a wired connection or a wireless connection. In this case, the effect will be more pronounced with a configuration in which the display image and volume are changed according to the relative position of the television device 101 (201) and the portable terminal 102 as in the second and third embodiments.

Also, in the third embodiment above, the current relative position of the portable terminal 102 and the television device 201 are defined, and the relative position can be corrected according to a change in the position of the portable terminal 102 sensed by the GPS sensor 134 with respect to the defined relative position, but the present invention is not limited to this. With the present invention, the relative position can be corrected according to a change in the position of the portable terminal 102 based on information from the acceleration sensor 32.

In the illustrated embodiment, the information related to a change in the position and orientation of the portable terminal 2 sensed by the acceleration sensor 32 and the gyro sensor 33 is acquired as the "first information" of the present invention. However, in the step S103 in FIGS. 5 and 10, the controller 27 can determines whether or not at least one of the information related to a change only in the position of the portable terminal 2 and the information related to the content reproduction state has been acquired. Also, in the step S103 in FIGS. 5 and 10, the controller 27 can determines whether or not at least one of the information related to a change only in the orientation of the portable terminal 2 and the information related to the content reproduction state has been acquired.

Also, in the first and second embodiments above, for the sake of convenience, a flow driven type of flowchart in which the processing of the controller 27 is performed along the processing flow, but the present invention is not limited to this. With the present invention, the processing of the controller 27 can be performed by event driven processing in which the processing is executed for each event. In this case, the processing can be completely event driven, or a combination of event driven and flow driven processing can be used.

The display device in accordance with one aspect includes a communication component configured to communicate with an electronic device with an electronic device-side display screen, the electronic device having a content reproduction function, a display component configured to display an electronic device-side display image that is displayed on the electronic device-side display screen of the electronic device, and a controller configured to acquire the electronic device-side display image via the communication component. The controller is further configured to acquire first information related to a change in at least one of position and orientation of the electronic device, and further configured to perform control to display the electronic device-side display image on the display component based on the first information.

With the display device in accordance with one aspect, as discussed above, the controller is configured to acquire the first information related to the change in the at least one of position and orientation of the electronic device, and is configured to perform control to display the electronic device-side display image on the display component based on the first information. Thus, the electronic device-side display image can be displayed on the display component based on the change in the position or orientation of the electronic device (first information) that occurs when the user picks up and uses the electronic device (when the user wants to display the content of the electronic device on the display component). This eliminates the need for video selection (input source selection) or other such operation, and the user can view the electronic device-side display image (content) by just performing a content reproduction operation. As a result, this keeps the operation for displaying the content of the electronic device on the display component of the display device from becoming too complicated, so user convenience can be improved.

With the display device in accordance with the above-mentioned aspect, the controller is further configured to perform control to display at least the electronic device-side display image on the display component in response to determining based on the first information that the at least one of position and orientation of the electronic device has changed. With this configuration, display on the display component can be performed flexibly according to changes in position or orientation that happen when the user wants to display the electronic device-side display image (the content of the electronic device) on the display component of the display device, and this improves user convenience.

In this case, the controller is further configured to perform control to display on the display component both the electronic device-side display image and a display image that is different from the electronic device-side display image and is originally displayed on the display component in response to determining based on the first information that the at least one of position and orientation of the electronic device has changed. With this configuration, the user can watch both the electronic device-side display image and the display image that is different from the electronic device-side display image at the same time on the single display component of the display device.

With the display device in accordance with the above-mentioned aspect, the controller is further configured to acquire second information related to a content reproduction state of the electronic device, and further configured to perform control to display the electronic device-side display image on the display component regardless of the first information in response to determining based on the second information that content of the electronic device is being reproduced. With this configuration, even if the first information related to the change in the at least one of position and orientation of the electronic device cannot be acquired, the electronic device-side display image can be reliably displayed based on the second information related to the content reproduction state of the electronic device. Also, if the content of the electronic device is being reproduced, then the electronic device-side display image can be displayed on the display component of the display device without the user having to perform any special operation. Thus, the operation for displaying the content of the electronic device on the display component of the display device can be more effectively prevented from becoming too complicated.

In this case, the controller is further configured to perform control to display the electronic device-side display image over an entire region of the display component in response to determining based on the second information that the content of the electronic device is being reproduced. With this configuration, the user can view the electronic device-side display image (content) in a full-screen display state, without having to perform any special operation, and merely by reproducing the content of the electronic device. This further improves user convenience.

In a configuration in which the controller acquires the second information related to the content reproduction state of the electronic device, the controller is further configured to perform control to display on the display component a display image that is different from the electronic device-side display image and is originally displayed on the display component before the electronic device-side display image is displayed on the display component during content reproduction in response to determining based on the second information that the content of the electronic device is not being reproduced, and determining based on the first information that the position and the orientation of the electronic device have not changed. With this configuration, if there is no need to display the electronic device-side display image on the display component, such as after the reproduction (viewing) of the content is finished, the display image on the display device side which had been originally displayed prior to the electronic device-side display image displayed on the display component during reproduction can be displayed (restored) on the display component without the user performing any special operation. This keeps the display switching operation for the display device from becoming too complicated, so user convenience can be further improved.

In a configuration in which the controller acquires the second information related to the content reproduction state of the electronic device, the controller is further configured to perform control to display on the display component a display image that is different from the electronic device-side display image and is originally displayed on the display component before the electronic device-side display image is displayed on the display component during content reproduction in response to determining that the electronic device is not been connected via the communication component. With this configuration, even if the electronic device and the display device have been disconnected, the display image on the display device side that is originally displayed prior to the electronic device-side display image displayed on the display component during reproduction can be displayed (restored) on the display component without any special operation being performed by the user. This also improves user convenience.

In a configuration in which the display image and the electronic device-side display image are both displayed on the display component, the controller is further configured to acquire third information related to the relative position of the electronic device with respect to the display component, further configured to determine the relative position of the electronic device with respect to the display component based on the third information, and further configured to change at least one of display position and display size of the electronic device-side display image relative to the display image on the display component according to the relative position of the electronic device with respect to the display component while the electronic device-side display image and the display image are both displayed on the display component. With this configuration, the relative position of the user with respect to the display component can be estimated (assumed) by determining the relative position of the electronic device with respect to the display component. Consequently, the at least one of display position and display size of the electronic device-side display image on the display component can be appropriately changed according to the relative position of the user with respect to the display component. As a result, the user can obtain the proper electronic device-side display image corresponding to the relative position of the user with respect to the display component.

With the display device in accordance with the above-mentioned aspect, the display device further includes a speaker configured to output audio. The controller is further configured to acquire third information related to the relative position of the electronic device with respect to the display component, further configured to determine the relative position of the electronic device with respect to the display component based on the third information, and further configured to change volume of the audio outputted from the speaker according to the relative position of the electronic device with respect to the display component. With this configuration, the relative position of the user with respect to the display component can be estimated from the relative position of the electronic device with respect to the display component, and the audio can be outputted in the proper volume corresponding to the estimated relative position of the user with respect to the display component.

The operation for displaying the content of an electronic device on a display device can be kept from becoming too complicated, which allows a display device to be provided that improves user convenience.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A display device, comprising:
a communication component configured to communicate with an electronic device with an electronic device-side display screen, the electronic device having a content reproduction function;
a display component configured to display an electronic device-side display image that is displayed on the electronic device-side display screen of the electronic device; and
a controller configured to acquire the electronic device-side display image via the communication component,
the controller being further configured to acquire first information related to a change in at least one of position and orientation of the electronic device, and further configured to perform control to display the electronic device-side display image on the display component based on the first information.

2. The display device according to claim 1, wherein
the controller is further configured to perform control to display at least the electronic device-side display image on the display component in response to determining based on the first information that the at least one of position and orientation of the electronic device has changed.

3. The display device according to claim 1 or 2, wherein
the controller is further configured to perform control to display on the display component both the electronic device-side display image and a display image that is different from the electronic device-side display image and is originally displayed on the display component in response to determining based on the first information that the at least one of position and orientation of the electronic device has changed.

4. The display device according to any one of claims 1 to 3, wherein
the controller is further configured to acquire second information related to a content reproduction state of the electronic device, and further configured to perform control to display the electronic device-side display image on the display component regardless of the first information in response to determining based on the second information that content of the electronic device is being reproduced.

5. The display device according to claim 4, wherein
the controller is further configured to perform control to display the electronic device-side display image over an entire region of the display component in response to determining based on the second information that the content of the electronic device is being reproduced.

6. The display device according to claim 4 or 5, wherein
the controller is further configured to perform control to display on the display component a display image that is different from the electronic device-side display image and is originally displayed on the display component before the electronic device-side display image is displayed on the display component during content reproduction in response to determining based on the second information that the content of the electronic device is not being reproduced, and determining based on the first information that the position and the orientation of the electronic device have not changed.

7. The display device according to any one of claims 1 to 6, wherein
the controller is further configured to perform control to display on the display component a display image that is different from the electronic device-side display image and is originally displayed on the display component before the electronic device-side display image is displayed on the display component during content reproduction in response to determining that the electronic device is not connected via the communication component.

8. The display device according to any one of claims 1 to 7, wherein
the controller is further configured to acquire third information related to relative position of the electronic device with respect to the display component, further configured to determine the relative position of the electronic device with respect to the display component based on the third information, and further configured to change at least one of display position and display size of the electronic device-side display image relative to the display image on the display component according to the relative position of the electronic device with respect to the display component while the electronic device-side display image and the display image are both displayed on the display component.

9. The display device according to any one of claims 1 to 8, further comprising
a speaker configured to output audio,
the controller being further configured to acquire third information related to relative position of the electronic device with respect to the display component, further configured to determine the relative position of the electronic device with respect to the display component based on the third information, and further configured to change volume of the audio outputted from the speaker according to the relative position of the electronic device with respect to the display component.

10. The display device according to any one of claims 1 to 9, wherein
the controller is further configured to arrange the electronic device-side display image on one side relative to the display image on the display component in response to determining that the electronic device is located on the one side relative to the display component based on the relative position of the electronic device with respect to the display component.

11. The display device according to any one of claims 1 to 10, wherein
the controller is further configured to perform control to display the electronic device-side display image smaller than the display image on the display component in response to determining that distance between the electronic device and the display component is less than a predetermined distance based on the relative position of the electronic device with respect to the display component.

12. The display device according to any one of claims 1 to 11, wherein
the controller is further configured to set the volume of the audio on one side larger than the other side in response to determining that the electronic device is located on the one side relative to the display component based on the relative position of the electronic device with respect to the display component.

13. The display device according to any one of claims 1 to 12, wherein
the controller is further configured to increase the volume of the audio as distance between the electronic device and the display component becomes larger.
